# EUROPÄISCHE PATENTANMELDUNG

(11) **EP 0 564 882 A1**
(43) Veröffentlichungstag der Anmeldung: **13.10.1993**
(21) Anmeldenummer: 93104636.1
(22) Anmeldetag: 22.03.1993
(51) Int. Cl.: A47G 7/00, A01K 63/00

(54) **Zierpflanzen-Behälter**

(30) Priorität: 27.03.1992 DE 4210156
(71) Anmelder: SPRICK GARTENZENTRUM GmbH, D-55543 Bad Kreuznach (DE)
(72) Erfinder: Sprick, Heinrich, W-6551 Bad Kreuznach (DE)
(74) Vertreter: Becker, Bernd, Dipl.-Ing.

(57) **Zusammenfassung**

Ein Zierpflanzen-Behälter enthält Blähton, Schamottgranulat, Steine und/oder Erde zum Halt und Wasser zur Nahrungsversorgung der Pflanzen (7). Hierbei ist in mindestens eine Seitenwand (4) des Behälters (1) eine Glasscheibe (6) als Sichtfenster eingesetzt. Die hinter einer entsprechenden Aussparung (5) in der Seitenwand (4) des aus Kunststoff bestehenden Behälters (1) angeordnete Glasscheibe (6) ist in ihrem Anlagebereich an der Seitenwand und in ihrem Übergangsbereich zu der Seitenwand (4) mittels Silikon (16) allseitig abgedichtet, wobei auf der entsprechenden Kunststofffläche des Behälters (1) als Primer Epoxidharz aufgebracht ist.

## Beschreibung

Die Erfindung bezieht sich auf einen Zierpflanzen-Behälter, in den Blähton, Schamottgranulat, Steine und/oder Erde zum Halt und Wasser zur Nahrungsversorgung der Pflanzen eingefüllt sind.

Derartige Behälter sind in den verschiedensten Ausführungsformen bekannt. Allen Behältern gemeinsam ist jedoch, das stets die in den oben offenen Behälter eingesetzten Pflanzen und Materialien nur ab der Oberkante des Behälters sichtbar sind. Der Betrachter kann somit das sogenannte "Innenleben" des Zierpflanzen-Behälters nicht erkennen, was beispielsweise insofern nachteilig ist, als der Betrachter nicht unmittelbar die tatsächliche Füllstandshöhe des Wassers feststellen kann. Darüber hinaus weisen die bekannten, ein- oder mehrfarbig ausgeführten Behälter keine besondere dekorative Ausgestaltung auf, wodurch die Behälter nicht ansprechend wirken.

Der Erfindung liegt die Aufgabe zugrunde, einen Zierpflanzen-Behälter der eingangs genannten Art zu schaffen, der einen von den bisherigen Erzeugnissen sich deutlich abhebenden ästhetischen Effekt gewährleistet.

Diese Aufgabe wird erfindungsgemäß dadurch gelöst, daß in mindestens eine Seitenwand des Behälters eine Glasscheibe als Sichtfenster eingesetzt ist.

Durch diese Maßnahme ergibt sich ein Zierpflanzen-Behälter von besonderer ästhetischer Form und Wirkung, da nunmehr dem Betrachter der Blick auf das Innere des Behälters freigegeben ist. Hierdurch wird eine gegenüber dem Bekannten völlig andersartige Schmuckwirkung erzielt. Gleichzeitig kann jederzeit der Ist-Stand des Wasserspiegels erkannt werden, wodurch ein aufgrund der Verdunstung des Wassers notwendiges Nachfüllen des Behälters mit Wasser stets zum richtigen Zeitpunkt durchführbar ist.

Zur optischen Anpassung des Behälters an seine Umgebung ist nach einer vorteilhaften Ausgestaltung der Erfindung der Behälter polygon-, kreis- oder kreissegementförmig ausgebildet. Hierbei weist bevorzugt zur variablen Gestaltung der einzelnen Behälter die Glasscheibe die Form eines Rechtecks, eines Trapezes, einer Elypse oder dergleichen auf.

Um eine dauerhafte Abdichtung der Glasscheibe gegenüber dem Behälter zu erzielen, ist nach einer vorteilhaften Weiterbildung der Erfindung die hinter einer entsprechenden Aussparung in der Seitenwand des aus Kunststoff bestehenden Behälters angeordnete Glasscheibe in ihrem Anlagebereich an der Seitenwand und in ihrem Übergangsbereich zu der Seitenwand mittels Silikon allseitig abgedichtet, wobei auf der entsprechenden Kunststofffläche des Behälters als Primer Epoxidharz aufgetragen ist. Das Epoxidharz geht mit dem Kunststoff eine dauerhafte und innige Verbindung ein, die im Zusammenwirken mit dem Silikon auch nach Jahren noch eine zuverlässige Abdichtung sicherstellt.

Damit auf einfache Art und Weise das Gewicht der Glasscheibe abgefangen wird, stützt sich bei einer vorteilhaften Ausgestaltung der Erfindung die Glasscheibe auf dem Boden des Behälters ab. Alternativ hierzu ist es auch möglich und zwar insbesondere dann, wenn die der Glasscheibe zugeordnete Aussparung in der Seitenwand sich nicht bis in die Nähe des Bodens des Behälters erstreckt, die Glasscheibe mit ihrer Unterseite auf mindestens eine an der Rückseite der Seitenwand angebrachten Stütze aufzulegen. Eine weitere Alternative der Abstützung der Glasscheibe besteht darin, die Glasscheibe in eine von der Rückseite her in die Seitenwand eingelassene, umlaufende Aussklinkung der Aussparung einzusetzen. Hierdurch bildet die Glasscheibe mit der Rückseite der Seitenwand eine plane Ebene.

Zwecks Erzielung einer weiteren Anhebung der ins Auge fallenden ästhetischen Wirkung des durch die Glasscheibe vermittelten Bildes ist nach einer vorteilhaften Weiterbildung des Erfindungsgegenstandes die Aussparung in der Seitenwand randseitig durch einen Blendrahmen abgedeckt.

Damit der durch die Glasscheibe zu betrachtende Innenraum des Behälters optimal zur Geltung kommt, ist nach einer weiteren Ausgestaltung der Erfindung innerhalb des Behälters mindestens ein Beleuchtungskörper, insbesondere Licht-Strahler angeordnet.

Zur ausreichenden Sauerstoffversorgung des in den Behälter eingefüllten Wassers ist nach einem weiteren Merkmal der Erfindung innerhalb des Behälters ein sich mindestens über die Wasseroberfläche erstreckender Berieselungskörper mit einem in seinem Innern zu seinem oberen Bereich führenden Steigrohr angeordnet, wobei das Steigrohr mit einer Wasser aus dem Behälter nehmenden Pumpe verbunden ist. Das den Berieselungskörper herabfließende Wasser nimmt aus der Luft hinreichend Sauerstoff auf, um das Wasser im Behälter mit genügend Sauerstoff zu versorgen. Die Sauerstoffaufnahme erfolgt mithin auf gleiche Weise wie bei einem natürlichen Fließgewässer. Durch den Berieselungskörper erreicht man zusätzlich eine Verdunstung einer relativ großen Wassermenge und damit eine Verbesserung des Raumklima, was vor allem für zentral geheizte Räume von Vorteil ist.

Für eine platzsparende und zweckmäßige Unterbringung der Pumpe und weiterer Zusatzvorrichtungen ist weiterhin bevorzugt vorgesehen, daß der Behälter auf einem Unterkasten aufgesetzt ist, der die Pumpe, den Pumpenmotor und weitere Zusatzvorrichtungen aufnimmt. Dadurch sind die ansonsten in der Nähe des Behälters aufgestellten und damit störend wirkenden Zusatzvorrichtungen dem Blick des Betrachters entzogen. Zweckmäßigerweise weist hierbei der Unterkasten die gleiche Form wie der Behälter auf und greift mit seiner Oberseite in eine umlaufende Außenschulter am Boden des Behälters ein. Dies gewährleistet einen sicheren Stand des Behälters auf dem Unterkasten. Damit die Zusatzvorrichtungen jederzeit zugänglich sind, ist bevorzugt der Unterkasten seitlich mit einer Zugangs-Öffnung versehen.

Weiterhin ist bevorzugt vorgesehen, daß in den Boden des Behälters eine Glasscheibe integriert ist, die von dem Licht eines im Unterkasten untergebrachten Licht-Strahlers beaufschlagbar ist. So ergibt sich die Möglichkeit, den Innenraum des Behälters von der Unterseite her mit einem nicht wasserdichten Lichtstrahler zu beleuchten, was insbesondere die Schmuckwirkung der Zierpflanzen erhöht. Um dabei bestimmte Bereiche des Innenraumes zusätzlich ausleuchten zu können, ist nach einer vorteilhaften Weiterbildung der Erfindung dem Lichtstrahler im Unterkasten ein verstellbarer Spiegel derart zugeordnet, daß ein Teil der Lichtstrahlen in Richtung auf die Glasscheibe im Boden des Behälters umgelenkt wird.

Nach einem weiteren erfindungsgemäßen Merkmal ist in den Boden des Behälters eine vor der endgültigen Montage verdrehbare, kreisförmige Platte eingesetzt, die die bodenseitige Glasscheibe aufnimmt. So ergibt sich die Möglichkeit, den Beleuchtungsbereich des Innenraumes des Behälters von der Unterseite her wahlweise in Abhängigkeit von der ausgewählten Gestaltung des Innenraumes festzulegen. Zweckmäßigerweise sind hierbei durch die Platte der Pumpenzulauf und der Pumpenablauf hindurchgeführt.

Bevorzugt trägt die Platte auf ihrer Oberseite ein mit einer entsprechenden Öffnung in der Platte fluchtendes Standrohr, das sich bis oberhalb der Wasseroberfläche erstreckt und durch das Versorgungsleitungen für innerhalb des Behälters untergebrachte Zusatzvorrichtungen, wie Licht-Strahler, Wasserspiele und dergleichen hindurchführbar sind. Auf diese Weise lassen sich auch nachträglich noch mit Versorgungsleitungen ausgerüstete Zusatzvorrichtungen im Innenraum des Behälters unterbringen, da diese Versorgungsleitungen ohne Schwierigkeiten über das Standrohr in den Unterkasten geführt werden können, wo sie an entsprechenden Einrichtungen anschließbar sind.

Der der Erfindung zugrundeliegende Gedanke wird in der nachfolgenden Beschreibung anhand mehrerer Ausführungsbeispiele, die in der Zeichnung dargestellt sind, näher erläutert. Es zeigt:
- Fig. 1: eine Vorderansicht eines vollständig bestückten Zierpflanzen-Behälters nach der Erfindung,
- Fig. 2: eine perspektische Darstellung des nicht bestückten Zierpflanzen-Behälters nach Fig. 1 in verkleinerter Darstellung,
- Fig. 3: eine perspektivische Ansicht eines alternativen Zierpflanzen-Behälters,
- Fig. 4: eine weitere Alternative des Zierpflanzen-Behälters in perspektivischer Darstellung,
- Fig. 5: eine andere Alternativausführung des Zierpflanzen-Behälters in perspektivischer Darstellung,
- Fig. 6: einen Schnitt durch den Behälter nach Fig. 2 gemäß der Linie VI-VI in vergrößerter Darstellung,
- Fig. 7: eine Alternativausführung der Darstellung nach Fig. 6,
- Fig. 8: eine Ansicht auf die Darstellung nach Fig. 7 in Richtung des Pfeiles VIII,
- Fig. 9: eine weitere Alternativausführung der Darstellung nach Fig. 6,
- Fig. 10: eine andere Alternativausführung der Darstellung nach Fig. 6,
- Fig. 11: eine perspektivische Ansicht eines nicht bestückten, auf einen Unterkasten aufgesetzten Zierpflanzen-Behälters,
- Fig. 12: eine Draufsicht auf die Darstellung nach Fig. 11 in Richtung des Pfeiles XII im vergrößerten Maßstab und
- Fig. 13: einen Schnitt durch die Darstellung nach Fig. 12 gemäß der Linie XIII-XIII.

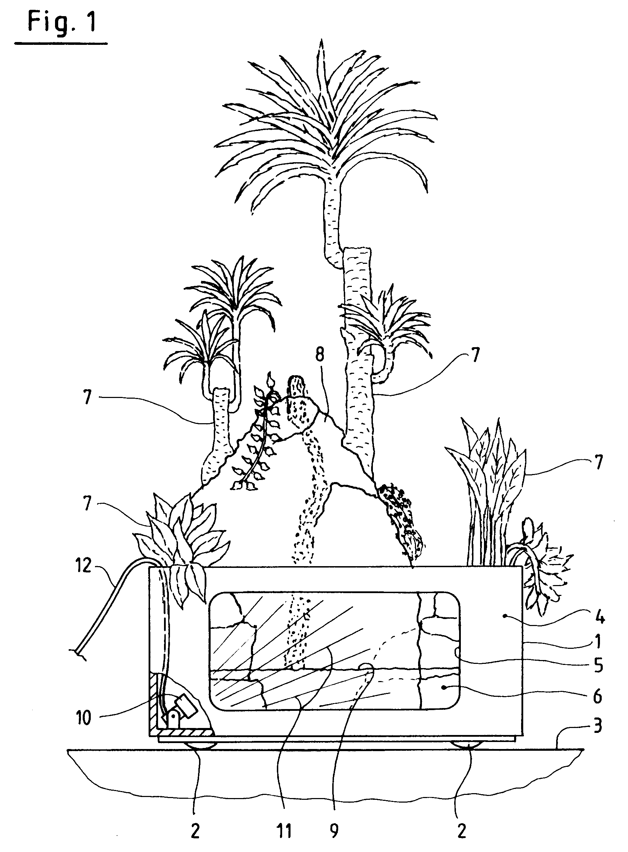

Der in Fig. 1 dargestellte Zierpflanzen-Behälter 1 steht mit seinen an der Unterseite angeformten Füßen 2 auf einem Boden 3. Zur leichten Verfahrbarkeit des Behälters 1 auf dem Boden 3 können die Füße 2 auch als Schwenkrollen ausgebildet sein. Der oben offene, aus Kunststoff hergestellte Behälter 1 weist in seiner vorderen Seitenwand 4 eine rechteckige Aussparung 5 mit abgerundeten Ecken auf, die durch eine durchsichtige Glasscheibe 6 geschlossen ist. Der Behälter ist teilsweise mit Wasser und mit einem Material gefüllt, das den Wurzeln der in den Behälter eingesetzten Zierpflanzen 7 Halt gibt. Diese Material kann aus Erde, Sand oder Steinen bestehen. Besonders vorteilhaft ist es, wenn dieses Material von einem Schüttgut gebildet wird, wie es bei Hydrokulturen verwendet wird. Hier bietet sich besonders Blähton oder Schamottgranulat an. Durch diese Materialien kann das Behälterwasser besonders leicht hindurchfließen und alle Wurzeln ständig umspülen, so daß eine regelmäßige Verteilung erreicht und ein Absetzen von im Wasser enthaltenen Feststoffen verhindert wird. Damit erübrigt sich auch ein regelmäßiges Reinigen. Des weiteren ist innerhalb des Behälters 1 ein Berieselungskörper 8 in Form eines Quellsteines angeordnet, durch den hindurch ein Steigrohr führt. Eine mit dem Steigrohr verbundene Wasserpumpe entnimmt Wasser aus dem Behälter 1 und leitet dieses über das Steigrohr nach oben zu dem aus mehreren Steinen gebildeten Berieselungskörper 8, von wo aus das Wasser über die Außenseite des Berieselungskörpers 8 in den Behälter 1 zurückfließt. Die Wasseroberfläche 9 liegt hierbei etwa im unteren Drittel der Glasscheibe 6. Ferner befindet sich im Innenraum des Behälters 1 unterhalb der Wasseroberfläche 9 ein wasserdichter Licht-Strahler 10, dessen durch die Wasseroberfläche 9 hindurchgehende Lichtstrahlen 11 aufgrund der Bewegung der Wasseroberfläche ständig gebrochen werden, was eine besonders ansprechende Beleuchtung des Innenraumes des Behälters 1 bewirkt. Die elektrische Anschlußleitung 12 ist über den Rand des Behälters 1 nach außen geführt.

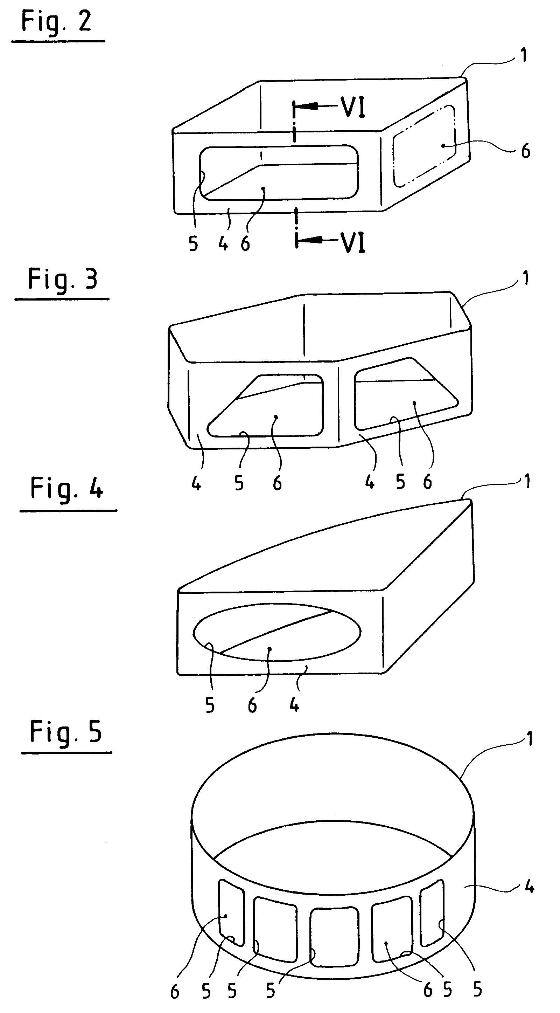

In den Fig. 2 bis 5 sind verschiedene Ausführungsformen des Behälters 1 mit unterschiedlicher Gestaltung der der Glasscheibe 6 zugeordneten Aussparung 5 veranschaulicht. So ist bei dem rechteckförmigen Behälter 1 nach Fig. 2 neben der Glasscheibe in der vorderen Seitenwand 4 eine weitere Glasscheibe 6 in einer seitlichen Seitenwand des Behälters 1 strichpunktiert angedeutet. Die Glasscheiben 6 haben hierbei eine Rechteckform. Der sechseckige Behälter 1 nach Fig. 3 ist mit zwei trapezförmigen Glasscheiben 6 in benachbarten Seitenwänden 4 ausgerüstet. Der kreissegmentförmige Behälter 1 gemäß Fig. 4 besitzt in einer Seitenwand 4 eine elypsenförmige Glasscheibe 6, während bei dem kreisförmigen Behälter 1 nach der Fig. 5 mehrere rechteckige Glasscheiben 6 nebeneinander in der Seitenwand 4 angeordnet sind.

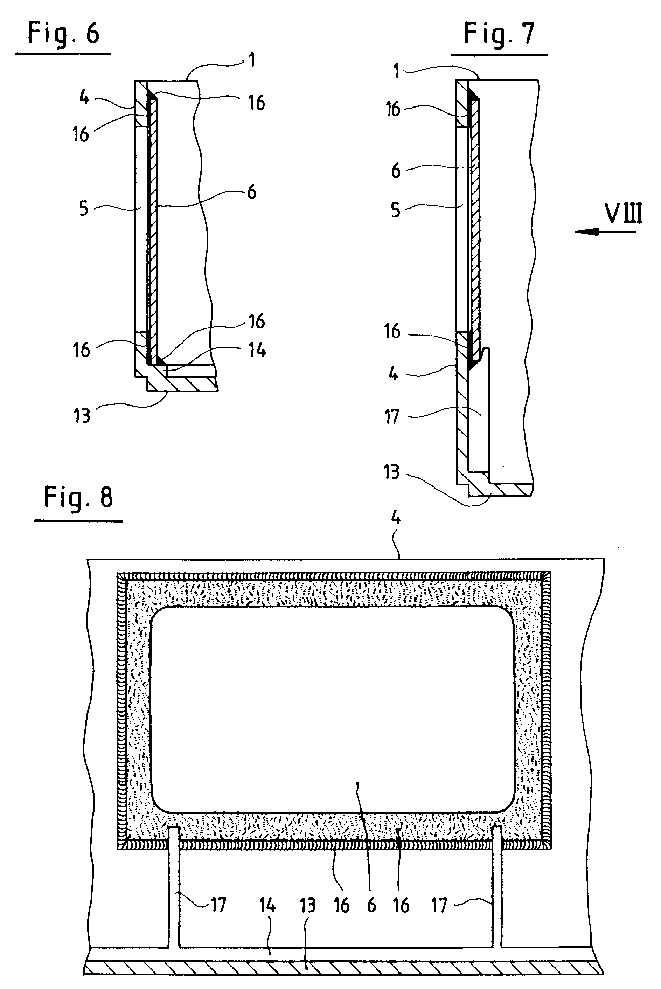

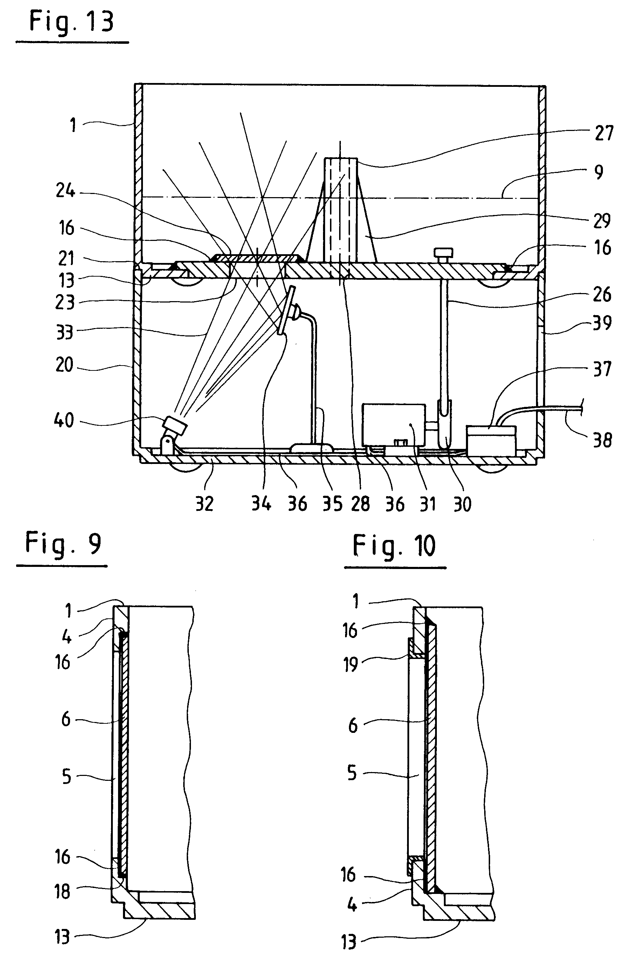

Bei der Detaildarstellung nach Fig. 6 stützt sich die Glasscheibe 6 auf einem innenliegenden, an dem Boden 13 des Behälters 1 angeformten Absatz 14 ab. Die hinter der Aussparung 5 in der Seitenwand 4 des Behälters 1 liegende Glasscheibe 6 ist zum einen in ihrem Anlagebereich an der Rückseite der Seitenwand 4 und zum anderen in ihrem Übergangsbereich zu der Seitenwand 4 bzw. zu dem Absatz 14 durch Silikon 16 abgedichtet, wobei als Grundierung ein auf der entsprechenden Kunststofffläche des Behälters 1 aufgebrachter Epoxidharz dient. Bei der in den Fig. 7 und 8 dargestellten Alternative ruht die Glasscheibe 6 mit ihrer Unterseite auf zwei parallel an der Rückseite der Seitenwand 4 des Behälters 1 angeformten Stützen 17. Auch in diesem Falle ist die Glasscheibe 6 allseitig durch Silikon 16 mit Epoxidharz als Primer an den entsprechenden Stellen abgedichtet. Bei der in Fig. 9 veranschaulichten Alternative der Befestigung der Glasscheibe 6 ist diese in eine von der Rückseite her in die Seitenwand 4 des Behälters 1 eingelassene, umlaufende Ausklinkung 18 eingesetzt, die entsprechend größer ausgeführt ist als die Aussparung 5. Mittels Silikon 16 mit zugeordnetem Epoxidharz als Primer ist die Glasscheibe 6 wiederum an den entsprechenden Stellen abgedichtet. Die in Fig. 10 gezeigte Detail-Darstellung entspricht im wesentlichen derjenigen der Fig. 6. Hierbei ist lediglich von der Vordereseite her in die Aussparung 5 der Seitenwand 4 des Behälters 1 randseitig ein Blendrahmen 19 eingesetzt.

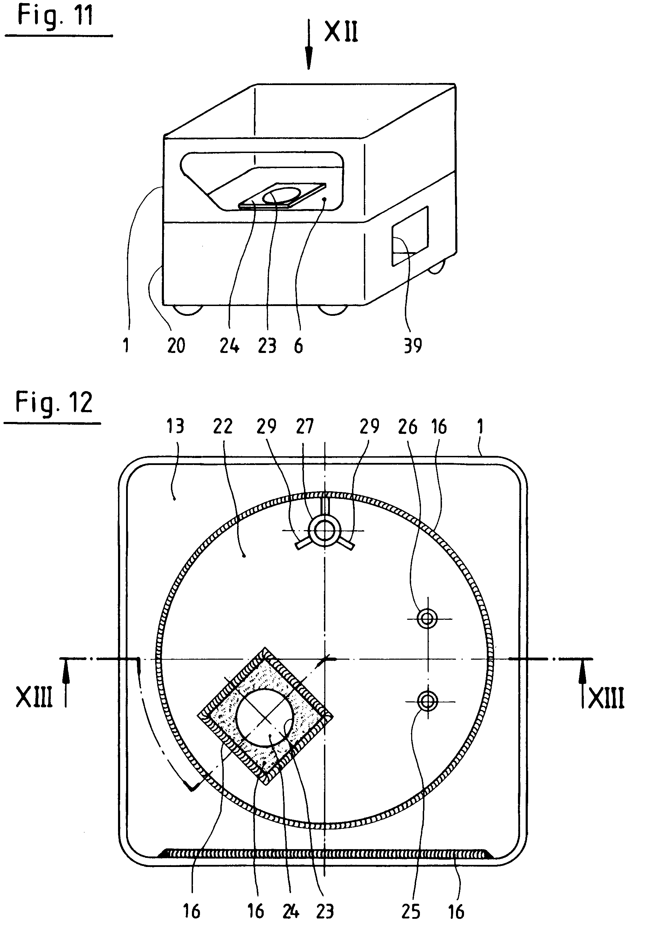

Die in den Fig. 11 bis 13 veranschaulichte Ausführung zeigt einen auf einen Unterkasten 20 aufgesetzten Behälter 1, wobei der Unterkasten 20 die gleiche Form wie der Behälter 1 aufweist. Der Unterkasten 20 greift mit seiner Oberseite in eine umlaufende Außenschulter 21 am Boden 13 des Behälters 1 ein. In den Boden 13 des Behälters 1 ist eine kreisförmige Platte 22 integriert, die vor ihrer endgültigen Befestigung mittels Silikon 16 mit zugeordnetem Epoxidharz als Primer verdrehbar ist. Auf einer kreisförmigen Durchgangsbohrung der Platte 22 liegt eine durch und Silikon 16 mit zugeordnetem Epoxidharz als Primer abgedichtete Glasscheibe 24 auf. Weiterhin sind durch die Platte 22 ein Pumpen-Zulauf 25 und ein Pumpen-Ablauf 26 hindurchgeführt. Des weiteren trägt die Platte 22 auf ihrer Oberseite einstückig ein Standrohr 27, das zum einen sich bis oberhalb der Wasseroberfläche 9 erstreckt und zum anderen mit seinem Innendurchmesser mit einer entsprechenden Öffnung 28 in der Platte 22 fluchtet. Das durch drei um 120° zueinander versetzt liegende Rippen 29 abgestütze Standrohr 27 dient zur Durchführung von Versorgungsleitungen für im Behälter 1 untergebrachte Zusatzvorrichtungen, wie Licht-Strahler, Wasserspiele und dergleichen. Der Pumpen-Zulauf 25 und der Pumpen-Ablauf 26 sind mit einer im Unterkasten 20 untergebrachten Pumpe 30 verbunden, die durch einen Pumpenmotor 31 beaufschlagbar ist. Weiterhin befindet sich auf dem Boden 32 des Unterkastens 20 ein Licht-Strahler 32, dessen Lichtstrahlen 33 in Richtung der bodenseitigen Glasscheibe 24 des Behälters 1 ausgerichtet sind. Einem Teil der Lichtstrahlen 33 ist ein verstellbarer Spiegel 34 zur Umlenkung dieser Lichtstrahlen durch die Glasscheibe 24 zugeordnet. Der Spiegel 34 ist an einem auf dem Boden 32 des Unterkastens 20 aufgestellten Ständer 35 befestigt. Die elektrischen Anschlußleitungen 36 des Licht-Strahlers 32 und des Pumpenmotors 31 gehen zu einem auf dem Boden 32 des Unterkastens 20 angeordneten elektrischen Verteilerkasten 37, von dem eine einzige Anschlußleitung 38 durch eine seitliche Zugangsöffnung 39 nach außen abgeht.

Die in der vorstehenden Beschreibung, den Zeichnungen sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Zierpflanzen-Behälter, in den Blähton, Schamottgranulat, Steine und Erde zum Halt und Wasser zur Nahrungsversorgung der Pflanzen eingefüllt sind, dadurch gekennzeichnet, daß in mindestens eine Seitenwand (4) des Behälters (1) ein Glasscheibe (6) als Sichtfenster eingesetzt ist.

2. Zierpflanzen-Behälter nach Anspruch 1, dadurch gekennzeichnet, daß er polygon-, kreis- oder kreissegmentförmig ausgebildet ist.

3. Zierpflanzen-Behälter nach Anspruch 1 oder 2, dadurch gekennzeichnet, daß die Glasscheibe (6) die Form eines Rechtecks, eines Trapezes, einer Elypse oder dergleichen aufweist.

4. Zierpflanzen-Behälter nach einem der Ansprüche 1 bis 3, dadurch gekennzeichnet, daß die hinter einer entsprechenden Aussparung in der Seitenwand des aus Kunststoff bestehenden Behälters (1) angeordnete Glasscheibe (6) in ihrem Anlagebereich an der Seitenwand (4) und in ihrem Übergangsbereich zu der Seitenwand (4) mittels Silikon (16) allseitig abgedichtet ist, wobei auf der entsprechenden Kunststofffläche des Behälters (1) als Primer Epoxidharz aufgetragen ist.

5. Zierpflanzen-Behälter nach einem der Ansprüche 1 bis 4, dadurch gekennzeichnet, daß die Glasscheibe (6) sich auf dem Boden (13) des Behälters (1) abstützt.

6. Zierpflanzen-Behälter nach einem der Ansprüche 1 bis 4, dadurch gekennzeichnet, daß die Glasscheibe (6) mit ihrer Unterseite auf mindestens einer an der Rückseite der Seitenwand (4) angebrachten Stütze (17) aufliegt.

7. Zierpflanzen-Behälter nach einem der Ansprüche 1 bis 4, dadurch gekennzeichnet, daß die Glasscheibe (6) in eine von der Rückseite her in die Seitenwand (4) eingelassene, umlaufende Ausklinkung (18) der Aussparung (5) eingesetzt ist.

8. Zierpflanzen-Behälter nach einem der Ansprüche 1 bis 7, dadurch gekennzeichnet, daß die Aussparung (5) in der Seitenwand (4) randseitig durch einen Blendrahmen (19) abgedeckt ist.

9. Zierpflanzen-Behälter nach einem der Ansprüche 1 bis 8, dadurch gekennzeichnet, daß innerhalb des Behälters (1) mindestens ein Beleuchtungskörper, insbesondere Licht-Strahler (10) angeordnet ist.

10. Zierpflanzen-Behälter nach einem der Ansprüche 1 bis 9, dadurch gekennzeichnet, daß innerhalb des Behälters (1) ein sich mindestens über die Wasseroberfläche (9) erstreckender Berieselungskörper (8) mit einem in seinem Inneren zu seinem oberen Bereich führenden Steigrohr angeordnet ist, wobei das Steigrohr mit einer Wasser aus dem Behälter (1) entnehmenden Pumpe verbunden ist.

11. Zierpflanzen-Behälter nach einem der Ansprüche 1 bis 10, dadurch gekennzeichnet, daß der Behälter (1) auf einen Unterkasten (20), der die Pumpe (30), den Pumpenmotor (31) und weitere Zusatzvorrichtungen (32, 34, 37, aufnimmt, aufgesetzt ist.

12. Zierpflanzen-Behälter nach einem der Ansprüche 1 bis 11, dadurch gekennzeichnet, daß der Unterkasten (20) die gleiche Form wie der Behälter (1) aufweist und mit seiner Oberseite in eine umlaufende Außenschulter (21) am Boden (13) des Behälters (1) eingreift.

13. Zierpflanzen-Behälter nach einem der Ansprüche 1 bis 12, dadurch gekennzeichnet, daß der Unterkasten (20) seitlich mit einer Zugangsöffnung (39) versehen ist.

14. Zierpflanzen-Behälter nach einem der Ansprüche 1 bis 13, dadurch gekennzeichnet, daß in den Boden (13) des Behälters (1) eine Glasscheibe (24) integriert ist, die von dem Licht eines im Unterkasten (20) untergebrachten Licht-Strahlers (32) beaufschlagbar ist.

15. Zierpflanzen-Behälter nach einem der Ansprüche 1 bis 4, dadurch gekennzeichnet, daß dem Licht-Strahler (32) im Unterkasten (20) ein verstellbarer Spiegel (34) derart zugeordnet ist, daß ein Teil der Lichtstrahlen (33) in Richtung auf die Glasscheibe (24) im Boden (13) des Behälters (1) umgelenkt wird.

16. Zierpflanzen-Behälter nach einem der Ansprüche 1 bis 15, dadurch gekennzeichnet, daß in den Boden (13) des Behälters (1) eine vor der endgültigen Montage verdrehbare, kreisförmige Platte (22) eingesetzt ist, die die bodenseitige Glasscheibe (24) aufnimmt.

17. Zierpflanzen-Behälter nach einem der Ansprüche 1 bis 16, dadurch gekennzeichnet, daß durch die Platte der Pumpen-Zulauf (25) und der Pumpen-Ablauf (26) hindurchgeführt ist.

18. Zierpflanzen-Behälter nach einem der Ansprüche 1 bis 17, dadurch gekennzeichnet, daß die Platte (22) auf ihrer Oberseite ein mit einer entsprechenden Öffnung (28) in der Platte (22) fluchtendes Standrohr (27) trägt, das sich bis oberhalb der Wasseroberfläche (9) erstreckt und durch das Versorgungsleitungen für innerhalb des Behälters (1) untergebrachte Zusatzvorrichtungen, wie Licht-Strahler, Wasserspiele und dergleichen hindurchführbar sind.
